# EUROPEAN PATENT SPECIFICATION

(11) **EP 1 748 889 B1**
(45) Date of publication and mention of the grant of the patent: **29.06.2011**
(21) Application number: 05741242.1
(22) Date of filing: 16.05.2005
(51) Int. Cl.: B32B 27/04, E04F 15/02

(54) **A PROCESS FOR THE MANUFACTURING OF A THERMOSETTING LAMINATE**
VERFAHREN FÜR DIE HERSTELLUNG EINES DUROPLASTISCHEN LAMINATS
PROCEDE DE PRODUCTION D'UN STRATIFIE THERMODURCISSABLE

(30) Priority: 26.05.2004 SE 0401341
(43) Date of publication of application: 07.02.2007
(73) Proprietor: Pergo (Europe) AB, 231 25 Trelleborg (SE)
(72) Inventor: ERIKSSON, Christina, S-231 62 Trelleborg (SE); PERSSON, Hans, S-284 33 Perstorp (SE)
(74) Representative: Müller-Gerbes Wagner Albiger Patentanwälte
(86) International application number: PCT/SE2005/000697
(87) International publication number: WO 2005/115750

(56) References cited:
- EP-A2- 1 245 382
- WO-A-92/09992
- DE-A1- 3 734 041
- DE-A1- 10 200 292
- US-A- 4 307 144
- US-A1- 2002 092 252
- US-A1- 2003 136 494

## Description

The present invention relates to a process for the manufacturing of a decorative thermosetting laminate with a conducting layer intended to decrease effects of static charging.

Products coated with thermosetting laminate are common nowadays. They are foremost used where the demands on abrasion resistance are great, but also where resistance towards different chemicals and moisture are demanded. As example of such products can be mentioned floors, floor beadings, work tops, desk tops and wall panels.

The thermosetting laminate most often consists of a number of base sheets with decor sheet arranged closest to the surface. The decor sheet can be provided with a desired decor or pattern. Such laminates are very hard in order to withstand the wear they are exposed to. As all plastic materials, the thermosetting material described does not conduct electricity. It is also known that such laminates may cause electrical charges when for example rubbed under unfavourable conditions. A person walking on for example a floor containing thermosetting laminate may then be charged and unpleasantly discharged when touching a grounded object like a door handle. This sudden discharge may besides being unpleasant also be hazardous to people with hart conditions. It is furthermore known that sensitive electronic equipment can be damaged by this type of electrostatic discharge. It is highly desirable to be able minimise this static build up.

It has, through the present invention, been made possible to meet the above mentioned desires and a thermosetting laminate with a lower level of electrostatic charge generation has been achieved. Accordingly, the invention relates to a process for the manufacturing of a decorative laminate. The laminate comprises an upper decorative and abrasion resistant thermosetting laminate layer and a carrying core. The invention is characterised in that the upper side of the core is provided with the abrasion resistant thermosetting laminate which is joined with the carrying core by means of a glue system comprising 2 - 25 % by weight of conducting particles calculated on the dry glue system. Said particles are selected from the group consisting of; carbon black, carbon fibre and a mixture thereof.

According to one embodiment of the invention the glue system further comprises urea formaldehyde glue and a curing agent. The curing agent suitably comprises ammonium chloride, urea, water and an inert filler.

According to one embodiment of the invention the thermosetting laminate is constituted by one or more decor papers, at least one overlay sheet arranged on top of the decor paper and optionally one or more conventional underlay papers arranged under the decor paper. At lest one of the sheets or papers are impregnated with thermosetting resin whereupon the sheets and papers are laminated together under increased pressure and increased temperature. At least one overlay sheet is suitably impregnated with thermosetting resin. The thermosetting resin used for impregnating the overlay sheet is suitably melamine formaldehyde resin. Also the optional conventional underlay papers are, when used, impregnated with thermosetting resin which suitably is selected from the group consisting of phenol-formaldehyde resin, melamine formaldehyde resin and urea formaldehyde resin.

At least one of the sheets impregnated with thermosetting resin, preferably the outermost, is suitably provided with hard particles of for example silicon oxide, aluminium oxide and/or silicon carbide with an average size of 1 - 100 µm, preferably 5 - 60 µm. The thermosetting laminate suitably has a thickness in the range 0.3 mm - 1.2 mm, preferably 0.3 mm - 0.9 mm.

The carrying core may according to different embodiments of the invention be constituted of particle board, fibre board, oriented strand board, fibre cement board or a board based on polymers such as polyurethane. A polymer based board may further comprise fibres or particles.

The purpose of adding the conductive material is to reduce the risk for build-up of static charges. A number of tests have been performed in order to evaluate the results in these tests 100 parts per weight of urea formaldehyde glue and 12 parts per weight of curing agent, calculated on wet and ready to use components, were mixed with 2, 5, 10, 15 and 20 parts per weight of carbon black. A sample with no carbon black were also produced. The samples, with different amounts of carbon black were then tested by rubbing the surface of the samples with different materials known to produce static electricity. It was shown during test that the samples having between 10 and 15 parts per weight seemed to be optimal even though higher levels of carbon black further decreased the electrostatic charges to some point. The static charge were reduced to about 1/3 for optimal ranges above as compared to the sample having no carbon black. Some tests even showed a reduction of the static charge to 1/10 of the levels achieved by the sample having no carbon black.

The present invention may suitably be used for manufacturing floor panels which includes a core covered with an upper decorative surface. The core most often consists of wood particles or fibre bonded together with glue or resin. The laminate is most often produced in large formats which are cut into smaller formats after the lamination. The panels achieved are also provided with means for joining at the edges. Since the core material is sensitive to moisture it may be advantageous to treat the area closest to the joint if the floor is to be exposed to moisture. This treatment may suitably include resin, wax or some kind of lacquer. It will not be necessary to treat the joint if the floor panels are to be glued since the glue itself will protect the joint from moisture penetration. This treatment of the edge may also comprise conducting material like for example carbon black. The decorative upper surface consists of a decorative paper which may be pre-impregnated with melamine-formaldehyde resin. One or more layers of so called overlay paper of cellulose, impregnated with melaimine-formaldehyde resin is suitably placed on top of the decorative paper. One or more of the above layers may be sprinkled with hard particles of aluminium oxide, silicon carbide or silicon oxide in connection to the impregnation in order to improve the abrasion resistance. The paper impregnated with resin is cured before, or in connection to applying it to the core. The paper layers are suitably laminated together before they are applied to the core in cases where the upper decorative surface is constituted by more than one paper layers. The lower side may suitably be coated with a lacquer or a resin impregnated paper.

## Claims

1. A process for the manufacturing of a decorative laminate, which laminate comprises an upper decorative and abrasion resistant thermosetting laminate layer and carrying core, wherein the upper side of the core is provided with the abrasion resistant thermosetting laminate layer, that the abrasion resistant thermosetting laminate layer is joined with the carrying core by means of a glue system comprising 2 - 25 % by weight of conducting particles calculated on the dry glue system.

2. A process according to claim 1 wherein said particles are selected from the group consisting of; carbon black, carbon fibre and a mixture thereof.

3. A process according to claim 1 wherein the glue system further comprises urea formaldehyde glue and a curing agent.

4. A process according to claim 2 wherein the curing agent comprises ammonium chloride, urea, water and an inert filler.

5. A process according to claim 1 wherein the thermosetting laminate layer is constituted by one or more decor papers, at least one overlay sheet arranged on top of the decor paper and optionally one or more underlay papers arranged under the decor paper, that at least one of the sheets or papers are impregnated with thermosetting resin whereupon the sheets and papers are laminated together under increased pressure and increased temperature.

6. A process according to claim 4 wherein the at least one overlay sheet is impregnated with thermosetting resin.

7. A process according to claim 5 wherein the thermosetting resin is a melamine formaldehyde resin.

8. A process according to claim 4 wherein the optional underlay papers are impregnated with thermosetting resin.

9. A process according to claim 7 wherein the thermosetting resin is selected from the group consisting of phenol-formaldehyde resin, melamine formaldehyde resin and urea formaldehyde resin.

10. A process according to claim 1 wherein the carrying core is constituted by a particle board.

11. A process according to claim 1 wherein the carrying core is constituted by a fibre board.

12. A process according to claim 1 wherein the carrying core is constituted by an oriented strand board.

13. A process according to claim 1 wherein the carrying core is constituted by a board based on polymers such as polyurethane.

14. A process according to claim 1 wherein the carrying core is constituted by a fibre cement board.

15. A process according to claim 12 wherein the board further comprise fibre.

16. A process according to claim 12 wherein the board further comprise particles.

17. A process according to claim 4 wherein at least one of the sheets impregnated with thermosetting resin, preferably the outermost, is provided with hard particles of silicon oxide, aluminium oxide and/or silicon carbide with an average size of 1 -100 µm, preferably 5 - 60 µm.

18. A process according to claim 1 or 16, wherein the thermosetting laminate layer has a thickness in the range 0.3 mm - 1.2 mm, preferably 0.3 mm - 0.9 mm.

## Patentansprüche

1. Ein Verfahren für die Herstellung eines dekorativen Laminats, wobei das Laminat eine obere dekorative und abriebfeste thermisch aushärtbare Laminatschicht und einen tragenden Kern aufweist, wobei die obere Seite des Kerns mit der abriebfesten Laminatschicht versehen ist, dass die abriebfeste Laminatschicht mit dem Kern durch Mittel in Form eines Klebesystems verbunden ist, welches 2-25 Gew.-% leitende Partikel umfasst, berechnet an dem trockenen Klebesystem.

2. Ein Verfahren nach Anspruch 1, wobei die Partikel ausgewählt sind aus einer Gruppe bestehend aus Carbonblack, Carbonfasern und einer Mischung daraus.

3. Ein Verfahren nach Anspruch 1, wobei das Klebesystem ferner Ureaformaldehyd-Klebstoff und einen aushärtenden Wirkstoff umfasst.

4. Ein Verfahren nach Anspruch 2, wobei der aushärtende Wirkstoff Ammoniumchlorid, Urea, Wasser und einen inerten Füller umfasst.

5. Ein Verfahren nach Anspruch 1, wobei die thermisch aushärtbare Laminatschicht gebildet ist durch ein oder mehrere Dekorpapiere, zumindest einer oben auf dem Dekorpapier angeordneten Overlayschicht und optional eine oder mehrere unter dem Dekorpapier angeordneten Unterlegpapiere, dass zumindest eine der Schichten oder Papiere imprägniert ist mit einem thermisch aushärtbaren Harz, wobei die Schichten und Papiere unter erhöhtem Druck und erhöhter Temperatur zusammen laminiert sind.

6. Ein Verfahren nach Anspruch 4, wobei die zumindest eine Overlayschicht mit thermisch aushärtbarem Harz imprägniert ist.

7. Ein Verfahren nach Anspruch 5, wobei das thermisch aushärtbare Harz ein Melamin-Formaldehydharz ist.

8. Ein Verfahren nach Anspruch 4, wobei die optionalen Unterlegpapiere mit thermisch aushärtbarem Harz imprägniert sind.

9. Ein Verfahren nach Anspruch 7, wobei das thermisch aushärtbare Harz ausgewählt ist aus der Gruppe bestehend aus Phenol-Formaldehydharz, Melamin-Formaldehydharz und Urea-Formaldehydharz.

10. Ein Verfahren nach Anspruch 1, wobei der tragende Kern durch eine Partikelplatte gebildet ist.

11. Ein Verfahren nach Anspruch 1, wobei der tragende Kern durch eine Faserplatte gebildet ist.

12. Ein Verfahren nach Anspruch 1, wobei der tragende Kern durch eine OSB-Platte gebildet ist.

13. Ein Verfahren nach Anspruch 1, wobei der tragende Kern durch eine Platte basierend auf Polymeren, wie Polyurethan, gebildet ist.

14. Ein Verfahren nach Anspruch 1, wobei der tragende Kern durch eine Faserzementplatte gebildet ist.

15. Ein Verfahren nach Anspruch 12, wobei das Brett ferner Fasern umfasst.

16. Ein Verfahren nach Anspruch 12, wobei das Brett ferner Partikel umfasst.

17. Ein Verfahren nach Anspruch 4, wobei zumindest eine der mit thermisch aushärtbarem Harz imprägnierten Schichten, vorzugsweise die äußerste, mit harten Partikeln aus Siliziumoxid, Aluminiumoxid und/oder Siliziumcarbid mit einer durchschnittlichen Größe von 1 - 100 µm, vorzugsweise 5 - 60 µm, versehen ist.

18. Ein Verfahren nach Anspruch 1 oder 16, wobei die thermisch aushärtbare Laminatschicht eine Dicke im Bereich von 0.3 mm - 1.2 mm, vorzugsweise 0.3 - 0.9 mm, hat.

## Revendications

1. Procédé de fabrication d'un stratifié décoratif, le stratifié comprenant une couche supérieure de stratifié thermodurcissable résistante à l'abrasion et décorative et un coeur porteur, où le côté supérieur du coeur est pourvu de la couche de stratifié thermodurcissable résistant à l'abrasion, la couche de stratifié thermodurcissable résistant à l'abrasion étant joint au coeur porteur au moyen d'un système de colle comprenant 2 à 25 % en poids de particules conductrices, par rapport au système de colle sèche.

2. Procédé selon la revendication 1, dans lequel lesdites particules sont choisies dans le groupe constitué par le noir de charbon, la fibre de carbone et un de leurs mélanges.

3. Procédé selon la revendication 1, dans lequel le système de colle comprend en outre de la colle urée formaldéhyde et un agent de vulcanisation.

4. Procédé selon la revendication 2, dans lequel l'agent de vulcanisation comprend du chlorure d'ammonium, de l'urée, de l'eau et une charge inerte.

5. Procédé selon la revendication 1, dans lequel la couche de stratifié thermodurcissable est constitué par un ou plusieurs papiers décor, au moins une feuille de recouvrement agencée au-dessus du papier décor et facultativement un ou plusieurs papiers à hausses agencés sous le papier décor, au moins une des feuilles ou un des papiers étant imprégné avec la résine thermodurcissable, les feuilles et papiers étant ainsi stratifiés ensemble sous une pression accrue et une température accrue.

6. Procédé selon la revendication 4, dans lequel au moins une feuille de recouvrement est imprégnée avec la résine thermodurcissable.

7. Procédé selon la revendication 5, dans lequel la résine thermodurcissable est une résine de mélamine formaldéhyde.

8. Procédé selon la revendication 4, dans lequel les papiers à hausses facultatifs sont imprégnés avec la résine thermodurcissable.

9. Procédé selon la revendication 7, dans lequel la résine thermodurcissable est choisie dans le groupe constitué par une résine de phénol formaldéhyde, une résine de mélamine formaldéhyde et une résine d'urée formaldéhyde.

10. Procédé selon la revendication 1, dans lequel le coeur porteur est constitué par un panneau de particules.

11. Procédé selon la revendication 1, dans lequel le coeur porteur est constitué par un panneau de fibres.

12. Procédé selon la revendication 1, dans lequel le coeur porteur est constitué par un panneau de grandes particules orientées.

13. Procédé selon la revendication 1, dans lequel le coeur porteur est constitué par un panneau à base de polymères tels que le poly(uréthane).

14. Procédé selon la revendication 1, dans lequel le coeur porteur est constitué par un panneau de ciment et fibres.

15. Procédé selon la revendication 12, dans lequel le panneau comprend en outre des fibres.

16. Procédé selon la revendication 12, dans lequel le panneau comprend en outre des particules.

17. Procédé selon la revendication 4, dans lequel au moins une des feuilles imprégnées avec la résine thermodurcissable, de préférence la plus externe, est pourvue de particules dures d'oxyde de silicium, d'oxyde d'aluminium et/ou de carbure de silicium d'une taille moyenne de 1 à 100 µm, de préférence de 5 à 60 µm.

18. Procédé selon la revendication 1 ou 16, dans lequel la couche de stratifié thermodurcissable a une épaisseur dans la plage de 0,3 mm à 1,2 mm, de préférence de 0,3 mm à 0,9 mm.
